(19) 

Europäisches Patentamt

European Patent Office

Office européen des brevets

(11)  **EP 4 456 609 A1**

(12)  **EUROPEAN PATENT APPLICATION**
published in accordance with Art. 153(4) EPC

(43) Date of publication:
**30.10.2024  Bulletin 2024/44**

(21) Application number: **21968694.6**

(22) Date of filing: **24.12.2021**

(51) International Patent Classification (IPC):
**H04W 52/02** (2009.01)

(52) Cooperative Patent Classification (CPC):
**H04W 52/02;** Y02D 30/70

(86) International application number:
**PCT/CN2021/141334**

(87) International publication number:
**WO 2023/115565 (29.06.2023 Gazette 2023/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
 • **HE, Chuanfeng**
   **Dongguan, Guangdong 523860 (CN)**
 • **XU, Weijie**
   **Dongguan, Guangdong 523860 (CN)**

(74) Representative: **Penza, Giancarlo**
**Bugnion S.p.A.**
**Viale Lancetti, 17**
**20158 Milano (IT)**

(54)  **WIRELESS COMMUNICATION METHOD, TERMINAL DEVICE, ACCESS NETWORK DEVICE, AND CORE NETWORK DEVICE**

(57)  Embodiments of the present application provide a wireless communication method, a terminal device, an access network device, and a core network device. A terminal device reports capability information corresponding to WUR of the terminal device, so that a network device can determine a mode for sending a WUS to the terminal device. The wireless communication method comprises: a terminal device sends first capability information, wherein the first capability information is capability information corresponding to WUR of the terminal device.

**200**

Terminal device

Access network device

S210，The terminal device sends first capability information to an access network device, and the first capability information is capability information corresponding to WUR of the terminal device

S220，Receiving the first capability information

**FIG. 7**

EP 4 456 609 A1

**Description**

TECHNICAL FIELD

The embodiments of the present disclosure relate to a communication field, and more particularly to, a wireless communication method, a terminal device, an access network device and a core network device.

BACKGROUND

In the New Radio (NR) system, a Wake Up Radio (WUR) is used to receive a Wake Up Signal (WUS), which has characteristics of low cost, low complexity and low power consumption. In this case, how the network device determines the manner for sending the WUS to the terminal device is a problem to be solved.

SUMMARY

The embodiments of the present disclosure provide a wireless communication method, a terminal device, an access network device and a core network device. The terminal device reports capability information corresponding to a WUR of the terminal device, and the network device may determine a manner for sending the WUS to the terminal device.

A first aspect provides a wireless communication method. The method includes the following operation.

A terminal device sends first capability information. The first capability information is capability information corresponding to a Wake Up Radio (WUR) of the terminal device.

A second aspect provides a wireless communication method. The method includes the following operation.

An access network device receives first capability information sent by a terminal device. The first capability information is capability information corresponding to a WUR of the terminal device.

A third aspect provides a wireless communication method. The method includes the following operation.

A core network device receives second capability information sent by an access network device. The second capability information is capability information corresponding to a WUR of the terminal device.

A fourth aspect provides a terminal device configured to perform the method in the first aspect described above.

In particular, the terminal device includes a functional module configured to perform the method in the first aspect described above.

A fifth aspect provides an access network device configured to perform the method in the second aspect described above.

In particular, the access network device includes a functional module configured to perform the method in the second aspect described above.

A sixth aspect provides a core network device configured to perform the method in the third aspect described above.

In particular, the core network device includes a functional module configured to perform the method in the third aspect described above.

A seventh aspect provides a terminal device including a processor and a memory. The memory is configured to store a computer program, and the processor is configured to invoke and run the computer program stored in the memory, to perform the method in the first aspect described above.

An eighth aspect provides an access network device including a processor and a memory. The memory is configured to store a computer program, and the processor is configured to invoke and run the computer program stored in the memory, to perform the method in the second aspect described above.

A ninth aspect provides a core network device including a processor and a memory. The memory is configured to store a computer program, and the processor is configured to invoke and run the computer program stored in the memory, to perform the method in the third aspect described above.

A tenth aspect provides an apparatus configured to implement the method in any of the first aspect to third aspect described above.

In particular, the apparatus includes a processor configured to invoke and run a computer program from a memory, to enable a device on which the apparatus is mounted to perform the method in any of the first aspect to third aspect described above.

An eleventh aspect provides a computer-readable storage medium configured to store a computer program that causes a computer to perform the method in any of the first aspect to third aspect described above.

A twelfth aspect provides a computer program product including computer program instructions that cause a computer to perform the method in any of the first aspect to third aspect described above.

A thirteenth aspect provides a computer program that, when executed on a computer, causes the computer to perform the method in any of the first aspect to third aspect described above.

According to the technical solutions, the terminal device reports the capability information corresponding to the WUR of the terminal device, and the network device may determine the manner for sending the WUS to the terminal device.

BRIEF DESCRIPTION OF THE DRAWINGS

FIG. 1 is a schematic diagram of architecture of a communication system to which embodiments of the present disclosure are applied.
FIG. 2 is a schematic diagram of a power-saving signal indicating whether a PDCCH is monitored according to the present disclosure.
FIG. 3 is a schematic diagram of a wake up receiver according to the present disclosure.
FIG. 4 is a schematic diagram of a Discontinuous Reception (DRX) cycle according to the present disclosure.
FIG. 5 is a schematic diagram of a terminal capability information indication according to the present disclosure.
FIG. 6 is a schematic diagram of a paging message according to the present disclosure.
FIG. 7 is a schematic interactive flowchart of a wireless communication method provided according to an embodiment of the present disclosure.
FIG. 8 is a schematic block diagram of a terminal device provided according to an embodiment of the present disclosure.
FIG. 9 is a schematic block diagram of an access network device according to an embodiment of the present disclosure.
FIG. 10 is a schematic block diagram of a core network device provided according to an embodiment of the present disclosure.
FIG. 11 is a schematic block diagram of a communication device provided according to an embodiment of the present disclosure.
FIG. 12 is a schematic block diagram of an apparatus provided according to an embodiment of the present disclosure.
FIG. 13 is a schematic block diagram of a communication system provided according to an embodiment of the present disclosure.

DETAILED DESCRIPTION

The technical solution of the embodiments of the present disclosure would be clearly and completely described in conjunction with the accompanying drawings in the embodiments of the present disclosure. It is apparent that the described embodiments are only part rather than all the embodiments of the embodiments of the present disclosure. All other embodiments obtained by those of ordinary skill in the art with respect to the embodiments of the present disclosure without creative efforts all fall within the scope of protection of the present disclosure.

The technical solution in the embodiments of the present disclosure may be applied to various communication systems, such as: a Global System Of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system for NR system, a LTE-based access to Unlicensed Spectrum (LTE-U) system, a NR-based access to Unlicensed Spectrum (NR-U) system, a Non-Terrestrial Networks (NTN) system, a Universal Mobile Telecommunication System (UMTS), a Wireless Local Area Network (WLAN), Internet of Things (IoT), a Wireless Fidelity (Wi-Fi), a 5th-Generation (5G) system or other communication systems.

Generally speaking, traditional communication systems support a limited number of connections and are easy to implement. However, with the development of communication technology, mobile communication systems will not only support traditional communication, but also support, for example, Device to Device (D2D) communication, Machine To Machine (M2M) communication, Machine Type Communication (MTC), Vehicle To Vehicle (V2V) communication, or V2X communication, etc. The embodiments of the present disclosure may also be applied to these communication systems.

In some embodiments, the communication system in the embodiments of the present disclosure may be applied to a Carrier Aggregation (CA) scenario, a Dual Connectivity (DC) scenario, a Standalone (SA) network distribution scenario, or a Non-Standalone (NSA) network distribution scenario.

In some embodiments, the communication system in the embodiments of the present disclosure may be applied to an unlicensed spectrum, and the unlicensed spectrum may also be considered as a shared spectrum. Optionally, the communication system in the embodiments of the present disclosure may also be applied to a licensed spectrum, and the licensed spectrum may also be considered as a non-shared spectrum.

In some embodiments, the communication system in the embodiments of the present disclosure may be applied to a Frequency Range 1 (FR1) band (corresponding to a frequency band from 410 MHz to 7.125 GHz), applied to a FR2 (corresponding to a frequency band from 24.25 GHz to 52.6 GHz), and also applied to new frequency ranges, such as a higher frequency band corresponding to a frequency band from 52.6 GHz to 71 GHz or a higher frequency band corresponding to a frequency band from 71 GHz to 114.25 GHz.

The embodiments of the present disclosure are described in connection with a network device and a terminal device. The terminal device may also be referred to as User Equipment (UE), an access terminal, a user unit, a user station, a mobile station, a remote station, a remote terminal, a mobile device, a user terminal, a terminal, a wireless communication device, a user agent or a user device, etc.

The terminal device may be a Station (ST) in the WLAN, a cellular telephone, a cordless telephone, a Session Initiation Protocol (SIP) telephone, a Wireless Local Loop (WLL) station, a Personal Digital Assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved Public Land Mobile Network (PLMN) network, etc.

In the embodiments of the present disclosure, the terminal device may be deployed on land, including an indoor or outdoor device, a hand-held device, a wearable device or a vehicle-mounted device. The terminal device may also be deployed on the water (such as on the ships, etc.). The terminal device may also be deployed in the air (such as, in airplanes, in balloons and in satellites, etc.).

In the embodiments of the present disclosure, the terminal device may be a mobile phone, a pad, a computer with a wireless transceiver function, a virtual reality (VR) terminal device, an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, a vehicle-mounted communication device, wireless communication chip/Application Specific Integrated Circuit (ASIC)/System on Chip (SoC), etc.

By way of example and not limitation, in the embodiments of the present disclosure, the terminal device may also be a wearable device. The wearable device, also referred to as a wearable intelligent device, is a generic term of wearable devices obtained by performing intelligent design and development on daily wearing products by using the wearable technology, such as glasses, gloves, watches, clothes, and shoes. The wearable device is a portable device directly worn or integrated to clothes or accessory of a user. The wearable device not only is a hardware device but also realizes powerful functions by software support, data interaction, and cloud interaction. Generalized wearable intelligent devices include full-featured, large size and complete or partial functions realized without relying on smart phones, such as smart watches or smart glasses, and includes only a certain application function, which is necessary to be used in conjunction with other devices such as a smart phone, such as various smart bracelets and smart jewelry for monitoring physical signs.

In the embodiments of the present disclosure, the network device may be a device configured to communicate with a mobile device. The network device may be an Access Point (AP) in the WLAN, a Base Transceiver Station (BTS) in the GSM or CDMA, or may be a NodeB (NB) in WCDMA, or may be an Evolutional Node B (eNB or eNodeB) in the LTE, or a relay ST or AP, or a vehicle-mounted device, a wearable device, a network device or a base station (a gNB) in the NR network, a network device in the future evolved PLMN, or a network device in the NTN network, etc.

By way of example and not limitation, in the embodiments of the present disclosure, the network device may have mobile characteristics. For example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, and the like. In some embodiments, the network device may also be a base station arranged on land, water or another place.

In the embodiments of the present disclosure, the network device may provide services for a cell, and the terminal device communicates with the network device through a transmission resource (for example, a frequency-domain resource or a spectrum resource) for the cell. The cell may be a cell corresponding to the network device (for example, a base ST). The cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-speed data transmission services.

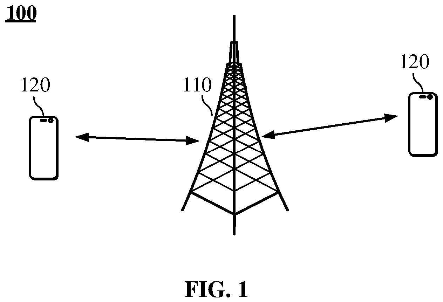

Exemplarily, the communication system 100 to which the embodiments of the present disclosure are applied is illustrated in FIG. 1. The communication system 100 may include a network device 110 that communicates with a terminal device 120 (or referred to as a communication terminal, or a terminal). The network device 110 may provide communication coverage for a particular geographic area and may communicate with terminal devices located within the coverage.

FIG. 1 exemplarily illustrates one network device and two terminal devices. In some embodiments, the communication system 100 may include multiple network devices, and other numbers of terminal devices may be included within the coverage of each network device, which is not limited by the embodiments of the present disclosure.

In some embodiments, the communication system 100 may also include other network entities, such as, a network controller, a mobility management entity, etc., which are not limited by the embodiments of the present disclosure.

It is to be understood that a device having a communication function in the network or system in the embodiments of the present disclosure may be referred to as a communication device. The communication system 100 illustrated in FIG. 1 is taken as an example, the communication device may include a network device 110 and a terminal device 120 that both have the communication function, and the network device 110 and the terminal device 120 may be the devices described above, which will not be described herein. The communication device may also include other devices in the communication system 100, such as, a network controller, a mobility management entity and other network entities, which are not limited in the embodiments of the present disclosure.

It should be understood that the terms "system" and "network" may usually be exchanged herein. The term "and/or" in the present disclosure is only an association relationship describing associated objects, for example, represents that previous and next associated objects may have three relationships. For example, A and/or B may represent three conditions: i.e., independent existence of A, existence of both A and B, and independent existence of B. The character "/" in the present disclosure usually represents that previous and next associated objects form an "or" relationship.

It is to be understood that the present disclosure relates to a first communication device and a second communication device. The first communication device may be a terminal device, such as, a mobile phone, a machine facility, a Customer Premise Equipment (CPE), an industrial device, a vehicle, etc. The second communication device may be a communication device that is opposite to the first communication device, such as, a network device, a mobile phone, an industrial device, a vehicle, etc. The present disclosure are described by taking the first communication device being a terminal device and the second communication device being a network device as specific examples.

Terms used in the embodiments of the present disclosure are used only for explanation of specific embodiments of the present disclosure and are not intended to limit the present disclosure. Terms "first", "second", "third", "fourth", etc. in the drawings, description and claims of the present disclosure are used to distinguish different objects, and are not used to describe a particular order. Furthermore, the terms "including" and "having" and any variations thereof are intended to cover non-exclusive inclusion.

It should be understood that the term "indication" mentioned in the embodiments of the present disclosure may be direct indication, or indirect indication, or indicate that there is an association relationship. For example, A indicating B may indicate that A directly indicates B, for example, B may be acquired through A, or indicate that A indirectly indicates B, for example, A indicates C, and B may be acquired through C, or indicate that there is an association relationship between A and B.

In the description of embodiments of the present disclosure, the term "correspondence" may indicate that there is a direct correspondence or indirect correspondence between the two elements, or may indicate that there is an association relationship between the two elements, or may indicate a relationship between indicating and being indicated, or between configuring and being configured.

In the embodiments of the present disclosure, the term "predefined" or "preconfigured" may be implemented by pre-storing corresponding codes, tables, or other manners for indicating relevant information in devices (e.g., including a terminal device and a network device). The specific implementation is not limited in the present disclosure. For example, "predefined" may refer to those defined in a protocol.

In the embodiments of the present disclosure, the term "protocol" may refer to a standard protocol in the communication field, which may include, for example, an LTE protocol, NR protocol and relevant protocol applied in the future communication system, which is not limited in the present disclosure.

In order to facilitate understanding of the technical solutions of the embodiments of the present disclosure, the technical solutions of the present disclosure will be described in detail by specific embodiments below. The following relevant technology as optional solutions may be combined with the technical solutions of the embodiments in any way, and shall fall within the scope of protection of the present disclosure. The embodiments of the present disclosure include at least some of the following contents.

In order to facilitate understanding of the technical solutions of the embodiments of the present disclosure, power saving of a terminal in the connected state involved in the present disclosure is described below.

In the evolution of 5G, higher requirement is put forward for the power saving of the terminal. For example, for the Discontinuous Reception (DRX) mechanism, during each on duration, the terminal constantly detects the Physical Downlink Control Channel (PDCCH) to determine whether a base station schedules a data transmission to the terminal. However, there may be no requirement for most terminals to receive data transmission for a long time, but the terminals still maintains a regular wake up mechanism to monitor the possible downlink transmissions. There is room for further optimization of the power saving of such terminals.

In some embodiments, the power-saving signal is introduced to achieve further power saving. The power-saving signal is used in combination with the DRX mechanism, and the terminal receives an indication of the power-saving wake up signal before the DRX on duration. When the terminal has the data transmission during a DRX cycle, the power-saving wake up signal "wakes up" the terminal to monitor the PDCCH during the DRX on duration. Otherwise, when the terminal has no data transmission during the DRX cycle, the power-saving wake up signal does not "wake up" the terminal, and the terminal does not need to monitor the PDCCH during the DRX on duration. Compared with the DRX mechanism, the terminal may not monitor the PDCCH during the DRX on duration when the terminal has no data transmission, thus realizing the power saving. The power-saving signal is carried by Downlink Control Information (DCI) format 2_6. The time except the DRX on duration of the terminal is called inactive time, and the time in the DRX on duration of the terminal is called active time.

To further enhance the power saving of the terminal in the connected state, an enhancement scheme of switching of a Search Space Set Group (SSSG) is also introduced, and a detection to the PDCCH is skipped when necessary to save the power. Control information associated with switching of the search space set group and the PDCCH skipping is also carried through the PDCCH.

In order to facilitate understanding of the technical solutions of the embodiments of the present disclosure, the power saving of a terminal in the Radio Resource Control (RRC) idle state or in the RRC inactive state associated with the present disclosure is described below.

The terminal in the idle state or the terminal in the inactive state receives a paging message in a DRX manner, and there is one Paging Occasion (PO) in one DRX cycle. The terminal device only receives the paging message in the PO, and does not receive the paging message at a time except the paging occasion, so as to save power. However, in the actual situation, a probability that the terminal device is paged may not be high. The terminal device periodically detects the PDCCH in the corresponding PO, but does not detect the paging indication information sent to the terminal device, which will cause waste of the power. Similar to the power saving of the terminal in the connected state, the power saving when the terminal in the idle state receives the paging message is optimized, and a similar power-saving signal is introduced. A power-saving signal called a Paging Early Indication (PEI) indicates whether the terminal receives a paging PDCCH in a target PO before the PO arrives. The power-saving signal is carried in a PDCCH channel and carried in a DCI format 2_7. The power-saving signal based on the PDCCH may also carry more power-saving information, such as, sub-grouping information indicating a sub-grouping of terminals corresponding to the power-saving information. The sub-grouping is a further grouping for multiple UEs corresponding to one PO calculated by a UE Identity (UE_ID). The sub-grouping information, combined with the power-saving information, may more finely indicate whether the terminal needs to receive paging in a target PO.

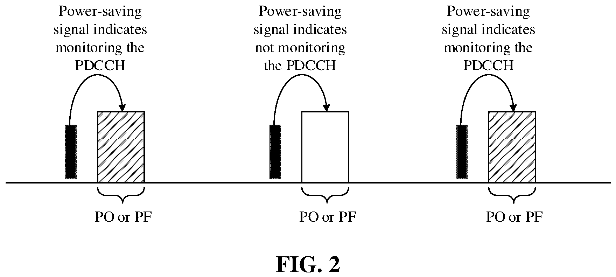

As shown in FIG. 2, one power-saving signal indicates whether the terminals in one or more paging sub-grouping receive paging in a corresponding Paging Frame (PF) or PO.

In order to facilitate understanding of the technical solutions of the embodiments of the present disclosure, the wake up receiver involved in the present disclosure is described below.

In order to further save power of the terminal, a wake up receiver is introduced to receive the power-saving signal. The wake up receiver has the characteristics of low cost, low complexity and low power consumption, and the wake up receiver receives the power-saving signal based on envelope detection. Therefore, a modulation mode, a waveform or the like of the power-saving signal received by the wake up receiver is different from those of a signal carried based on the PDCCH. The power-saving signal is an envelope signal obtained by performing the Amplitude-Shift Keying (ASK) on a carrier signal. The demodulation of the envelope signal is mainly implemented based on an energy driven low-power-consumption circuit provided by a radio frequency signal, and the envelope signal may be passive. The wake up receiver may also be powered through the terminal. No matter what the power supplying manner the wake up receiver is supplied, the wake up receiver greatly reduces the power consumption compared with the traditional receiver of the terminal. The wake up receiver may be combined with the terminal as an additional module of the terminal receiver, or may be alone used as a wake up function module of the terminal.

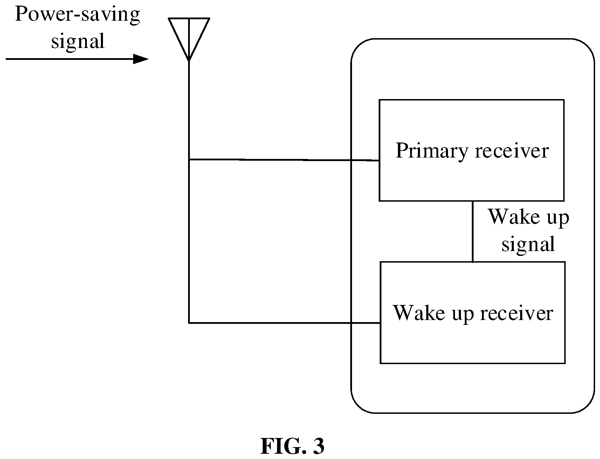

A system block diagram of a wake up receiver waked up by zero-power-consumption may be shown in FIG. 3. The wake up receiver receives a power-saving signal. If the terminal needs to turn on the receiver, a primary receiver of the terminal may be turned on through the wake up signal. Otherwise, the primary receiver of the terminal may be in an off state.

Specifically, the wake up receiver may be connected to the primary receiver of the terminal based on Wake Up Radio (WUR).

In order to facilitate understanding of the technical solutions of the embodiments of the present disclosure, the paging involved in the present disclosure is described below.

In the NR system, the network may send paging to a terminal in the idle state and a terminal in the connected state. The paging procedure may be triggered by a core network or a base station, for sending a paging request to the terminal in the idle state, or notifying an updating of system information, and notifying the terminal to receive information such as information from Earthquake And Tsunami Warning System (ETWS) and Commercial Mobile Alert Service (CMAS). Upon receiving the paging message from the core network, the base station parses the message, to obtain a Tracking Area Identity (TAI) list of the terminal, and performs air interface paging in a cell belonging to a tracking area in the list. A core network domain of the paging message is not decoded at the base station, and is transmitted to the terminal through the transparent transmission. Upon receiving the paging message from the core network, the base station aggregates the paging messages from the UEs having the same Paging Occasion (PO) into one paging message, and transmits the one paging message to the UE through paging channels. The UE receives a paging parameter through a system message, calculates a PO in combination with its own UE_ID, and receives a paging message at a time corresponding to the PO. The paging message is carried by a Physical Downlink Shared Channel (PDSCH), and the UE obtains paging indication information by detecting a PDCCH scrambled by a Paging Radio Network Temporary Identity (P-RNTI), and receives the paging message. The UE in the idle state will save power in a manner of DRX, and the UE will obtain DRX information from System Information Block Type 2 (SIB2). The PDCCH scrambled by the P-RNTI is monitored in a PO on a Paging Frame (PF) in one DRX cycle to receive the paging message.

The PF indicates a system frame number where the paging message is located, and the PO indicates a possible moment when the paging message appears. One PF may include one or more POs, and UE only needs to monitor its own PO within each DRX cycle or each paging cycle. The System Frame Number (SFN) satisfying Formula 1 may be used as a PF:

$$(SFN + PF\_offset) \bmod T = (T \operatorname{div} N) * (UE\_ID \bmod N) \qquad \text{Formula 1}$$

An index, i.e., i_s, of a PO corresponding to the UE_ID in the PF may be calculated according to Formula 2.

$$i\_s = floor\ (UE\_ID/N) \bmod Ns \qquad \text{Formula 2}$$

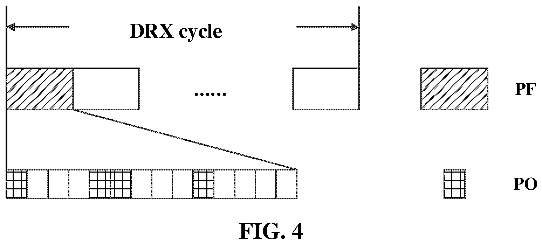

T represents the DRX cycle of the UE, if a default DRX cycle indicated in the system message is recorded as T_sib, T = min (T_ue, T_sib) if a DRX value T_ue of the UE has been configured; and a default value, T = T_sib, indicated in the system message is used if T_ue is not configured. UE_ID= (5G-S-TMSI mod 1024). N denotes the number of PFs in T. Ns denotes the number of POs in one PF. PF_offset is a frame offset used for determining the PF. FIG. 4 shows a position of the PF within one DRX cycle, and a position of the PO within the PF.

In order to facilitate understanding of the technical solutions of the embodiments of the present disclosure, the wake up signal involved in the present disclosure is described below.

In some embodiments, wake up signals are defined for each of the DRX and the paging, to indicate information received by the terminal device in the PDCCH. The information is carried through the PDCCH. A wake up signal supported by the terminal device is also reported to the network as a capability.

The wake up signal introduced in the LTE system is used by the terminal device to receive the paging, and the wake up signal as a power-saving signal instructs the terminal device to receive the paging. In order to enable the base station to know the capability that the terminal device receives the power-saving signal, following signaling is defined: terminal capability information (UECapabilityInformation) and terminal-radio paging information (UE-RadioPagingInfo), which are used by the terminal device to report the paging-related capability to the access network device (such as the base station).

For example, a syntax element corresponding to UECapabilityInformation may be described as follows:

```
UECapabilityInformation-v1250-IEs:: = SEQUENCE {
ue-RadioPagingInfo-r12 UE-RadioPagingInfo-r12 OPTIONAL,
nonCriticalExtension SEQUENCE { } OPTIONAL
}
```

For example, a syntax element corresponding to UE-RadioPagingInfo may be described as follows:

```
-- ASNISTART
UE-RadioPagingInfo-r12 ::= SEQUENCE {
ue-Category-v1250 INTEGER (0) OPTIONAL,
...,
[[ ue-CategoryDL-v1310 ENUMERATED {m1 } OPTIONAL,
ce-ModeA-r13 ENUMERATED { true } OPTIONAL,
ce-ModeA-r13 ENUMERATED { true } OPTIONAL
]],
[[ wakeUpSignal-r15 ENUMERATED {true} OPTIONAL,
wakeUpSignal-TDD-r15 ENUMERATED { true } OPTIONAL,
wakeUpSignalMinGap-eDRX-r15 ENUMERATED {ms40, ms240, ms1000,
ms2000} OPTIONAL,
wakeUpSignalMinGap-eDRX-TDD-r15 ENUMERATED {ms40, ms240, ms1000,
ms2000} OPTIONAL
]]
}
```

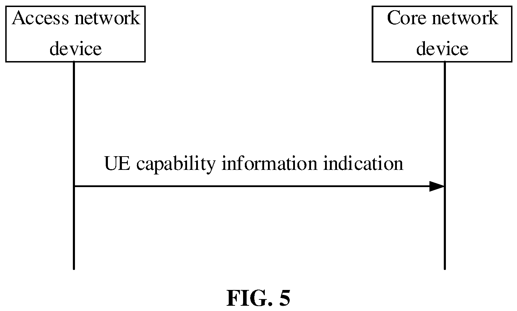

The terminal device reports its own paging-related capability to an access network device (such as a base station) during an attach procedure. The access network device (such as a base station) reports the paging-related capability of the terminal device to a core network device (such as a Mobility Management Entity (MME)) through a UE radio capability for paging in a signaling of UE capability information indication (UE CAPABILITY INFO INDICATION). The core network device stores the paging-related capability information of the terminal device, for example, as shown in FIG. 5.

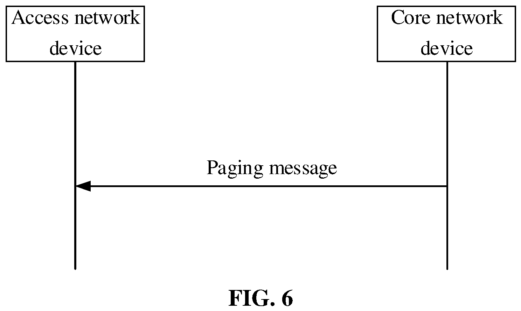

When the core network device initiates a paging for the terminal device, the core network device (e.g. MME) carries information of the UE Radio Capability for Paging in a paging message sent to the access network device (e.g. the base station). After the access network device (such as the base station) receives the information of the UE Radio Capability for Paging, the access network device may adopt a paging method according to the paging-related capability supported by the terminal device, such as, instructing the terminal device to receive the paging by using a wake up signal, as shown in FIG. 6.

It is to be noted that in case where the terminal in the idle state or the inactive state reports the wake up signal-related capability for paging, the base station does not maintain the context of the terminal in the idle state or the inactive state, and thus necessarily obtains the wake up signal-related capability of the terminal to be paged from the core network.

The wake up signal is also introduced for the terminal device in the RRC connected state to indicate the wake up of the terminal device in the DRX state. The terminal device needs to report the wake up signal-related capability to the base station. Since the terminal device is in the RRC connected state, the base station may maintain the context of the terminal device, and send the wake up signal according to the wake up signal-related capability of the terminal device.

In order to facilitate understanding of the technical solutions of the embodiments of the present disclosure, the problems to be solved by the present disclosure are described below.

After a Wake Up Signal (WUS) is received based on the Wake Up Radio (WUR), how the network device determines a manner for sending the WUS to the terminal device is a problem to be solved.

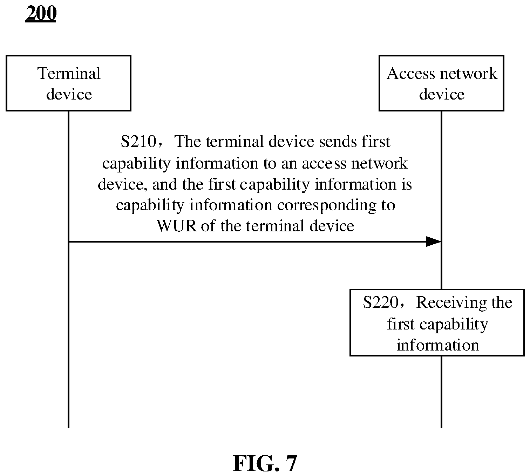

FIG. 7 is a schematic flowchart of a wireless communication method 200 according to an embodiment of the present disclosure. As shown in FIG. 7, the wireless communication method 200 may include at least some of the following operations S210 and S220.

In operation S210, a terminal device sends first capability information to an access network device. The first capability information is capability information corresponding to a WUR of the terminal device.

In operation S220, the access network device receives the first capability information sent by the terminal device.

In the embodiment of the present disclosure, the access network device may be, for example, a base station.

In the embodiment of the present disclosure, a wake up receiver of the terminal device may be connected to a primary receiver of the terminal device based on the WUR. In some embodiments, the "WUR" described in the embodiment of the present disclosure may also be referred to as the "wake up receiver".

In the embodiment of the present disclosure, the "Wake Up Signal (WUS)" may also be referred to as a "power-saving signal", which is not limited in the present disclosure.

In some embodiments, the wake up receiver is a zero-power-consumption receiver or the wake up receiver is a low-power receiver having the power consumption less than a predetermined value, and the primary receiver is a traditional receiver. The wake up receiver may receive the wake up signal or the power-saving signal in the first transmission manner, and the primary receiver may receive the wake up signal or the power-saving signal in the second transmission manner.

Specifically, under the same condition, for example, when each of the first transmission manner and the second transmission manner is used for transmitting the wake up signal or the power-saving signal, the power consumption of the first transmission manner is less than that of the second transmission manner. Different from the primary receiver of the terminal device, the wake up receiver is a receiver module configured to receive the wake up signal or the power-saving signal. Compared with the primary receiver of the terminal device, the wake up receiver is a receiver with low power consumption or even zero power consumption. The wake up receiver adopts a technology such as the Radio Frequency Identification (RFID) technology, including passivity, envelope detection, power harvesting and so on. The wake up receiver may be activated and powered by a radio frequency signal, for driving the wake up receiver to receive the wake up signal or the power-saving signal and to further send indication information to the primary receiver. In this way, the primary receiver is waken up to further receive a control channel. The wake up receiver may be combined with the terminal device as an additional module of the primary receiver of the terminal device, or may be alone used as a wake up function module of the terminal device.

In some embodiments, the terminal device may receive a wake up signal corresponding to paging based on the WUR, and/or the terminal device may receive a wake up signal corresponding to a DRX based on the WUR. In some embodiments, the terminal device may also receive other signals based on the WUR, which is not limited in the present disclosure.

In some embodiments, the terminal device is in the RRC idle state, or the terminal device is in the RRC inactive state. In this case, the first capability information may include paging-related capability information.

In some embodiments, the terminal device is in the RRC connected state. In this case, the first capability information may include DRX-related capability information.

In a first example, the first capability information includes but is not limited to at least one of: WUR capability information of the terminal device, type information of a WUS supported by the WUR of the terminal device, a time interval between the WUS supported by the WUR of the terminal device and an associated paging occasion, or a time interval between the WUS supported by the WUR of the terminal device and an associated paging frame.

That is to say, in the embodiment corresponding to the first example, the terminal device is in the RRC idle state or the terminal device is in the RRC inactive state.

In some implementations, the time interval between the WUS supported by the WUR of the terminal device and the associated paging occasion may be, for example, a minimum interval between the WUS supported by the WUR of the terminal device and the associated paging occasion.

In some implementations, the time interval between the WUS supported by the WUR of the terminal device and the associated paging frame may be, for example, a minimum interval between the WUS supported by the WUR of the terminal device and the associated paging frame.

In some implementations of the first example, the time interval between the WUS supported by the WUR of the terminal device and the associated paging occasion includes: a time interval between each of different types of WUSs supported by the WUR of the terminal device and a respective associated paging occasion.

In some implementations of the first example, the time interval between the WUS supported by the WUR of the terminal device and the associated paging frame includes: a time interval between each of different types of WUSs supported by the WUR of the terminal device and a respective associated paging frame.

In some implementations of the first example, the WUR capability information of the terminal device includes but is not limited to at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

In some implementations, the power supply manner supported by the WUR of the terminal device is wireless power supply. For example, the WUR of the terminal device is powered by an access network device (such as a base station), or the WUR of the terminal device is powered by a power supply node. Alternatively, the power supply manner supported by the WUR of the terminal device is power supply from the terminal device, that is, the terminal device supplies power for the WUR of the terminal device.

In some implementations, the modulation manner supported by the WUR of the terminal device is a modulation manner of the received signal supported by the wake up receiver, including the Amplitude Shift Keying (ASK) modulation, Frequency Shift Keying (FSK) modulation, 2Phase-Shift Keying (2PSK) and the like. The ASK is a digital modulation in which amplitude of a carrier varies with the digital baseband signal. When the digital baseband signal is binary, the ASK is binary Amplitude Shift Keying (2ASK). The 2ASK, also known as Switch Keying or On-Off Keying (OOK), controls by using unipolar non-return-to-zero code sequence a positive line carrier to be turned on or turned off. Alternatively, the ASK also includes 4ASK, 8ASK, etc., which is not limited in the embodiment. The FSK is a digital modulation in which a frequency of a carrier varies with the digital baseband signal. When the digital baseband signal is binary, the FSK is binary Frequency Shift Keying (2FSK). The 2FSK transforms two different carrier signals into digital signals to implement information transmission. The state of transmitted information is represented by the change of frequency of the carrier, and the frequency of modulated carrier varies with the states 0 and 1 of binary sequence. Optionally, the FSK also includes 4FSK, 8FSK, etc., which is not limited in the embodiment. The PSK is a digital modulation in which a phase of the carrier varies with the digital baseband signal. The 2PSK is the simplest form of the PSK, and transmits binary information by using two carriers, a difference of initial phases of which is 180.

In some implementations, the bandwidth supported by the WUR of the terminal device includes a bandwidth at which the wake up receiver receives the wake up signal.

In some implementations, the frequency band supported by the WUR of the terminal device includes a frequency band in which the wake up receiver operates, etc.

In some implementations, the signal waveform supported by the WUR of the terminal device is associated with the demodulation manner supported by the WUR of the terminal device, and different signal waveforms are generated by using different modulation manners.

In some implementations, the reception time supported by the WUR of the terminal device may be, for example, a periodic starting time length, a turn-on cycle of the wake up receiver, etc.

In some implementations, the information type supported by the WUR of the terminal device includes but is not limited to at least one of: channel occupancy information, switching information of the search space set group of the PDCCH, skipping information of the PDCCH monitoring occasion, a DRX command, physical layer signaling, Medium Access Control (MAC) layer signaling, or RRC layer signaling.

In some implementations of the first example, the terminal device receives first configuration information, and the first configuration information configures a target paging resource, at least one terminal device corresponding to the target paging resource supports the capability information corresponding to the WUR, and the at least one terminal device includes the terminal device. For example, the access network device sends the first configuration information to the terminal device. The first configuration information may be carried by a System Information Block (SIB).

It is to be noted that the terminal device calculates a position of the paging occasion (PO) according to its own ID, and receives the paging message. The terminal devices in a cell have different capability for receiving paging-related wake up signals, the terminal devices may be based on the PEI, or a wake up signal supported by the WUR, or the terminal device may not support the wake up signal. At present, when a paging resource is configured, the terminal devices of all capabilities are divided into POs according to a unified rule without considering the coexistence of terminal devices having different wake up signal-related capabilities. Therefore, terminal devices having different capabilities may be included in one PO. When the terminal device obtains the capability of the terminal device to be paged from the core network, the wake up signal sent by the terminal device may only be used by a part of terminal devices with wake up signal-related capability within the PO, which cannot achieve the best power saving effect.

In the embodiment of the present disclosure, the network device (such as the access network device or the core network device) configures an independent paging resource, i.e. a target paging resource configured by the first configuration information, for a terminal device (which may be also known as a terminal device having a specific wake up signal-related capability) supporting the capability information corresponding to the WUR. The paging resource is indicated in the SIB, and the terminal device supporting the capability information corresponding to the WUR acquires the paging resource and calculates a PO corresponding to the paging resource based on the UE ID.

Since the UEs corresponding to the target paging resource all support the capability information corresponding to the WUR, the access network device may instruct the UEs to receive the paging through the wake up signal supported by the WUR, thus achieving the best power saving effect.

In some implementations of the first example, after the access network device receives the first capability information, the access network device sends second capability information to the core network device, and the second capability information includes a part of or all of contents included in the first capability information.

The core network device receives the second capability information sent by the access network device, and the second capability information is capability information corresponding to a WUR of the terminal device. In this case, the second capability information may include a part of or all of contents included in the first capability information.

In some implementations, the second capability information includes at least one of: WUR capability information of the terminal device, type information of a WUS supported by the WUR of the terminal device, a time interval between the WUS supported by the WUR of the terminal device and an associated paging occasion, or a time interval between the WUS supported by the WUR of the terminal device and an associated paging frame.

For example, since a modulation manner, a waveform or the like of the wake up signal supported by the WUR is different from those of the existing signal, the reception performance of the WUR is also different from the reception performance of the traditional receiver, and the coverage of the wake up signal received by the WUR is worse than that of the traditional signal. Therefore, the access network device may determine, according to a situation of the cell, such as factors of the size of the cell, the capability of the access network device, resource configuration, whether to support the paging of the wake up signal supported by the WUR and determine the content included in the second capability information.

In some implementations of the first example, the access network device receives the paging message sent by the core network device. The paging message includes third capability information, and the third capability information includes a part or all of contents included in the second capability information, and the access network device determines to wake up the terminal device by using the type of the WUS supported by the WUR of the terminal device to receive a paging message.

The core network device sends the paging message to the access network device. The paging message includes the third capability information, and the third capability information includes a part or all of contents included in the second capability information.

In some implementations, the access network device determines, according to implementation of the access network device or a measurement result of the terminal device, to wake up the terminal device by using the type of the WUS supported by the WUR of the terminal device to receive the paging message.

For example, when the core network initiates paging for a terminal device, an Access and Mobility Management Function (AMF) entity (or an MME entity) carries a WUR-related capability of the terminal device (which may include capability information corresponding to the WUR of the terminal device and/or a PDCCH-based PEI) in a paging message sent to an access network device (such as a base station). After the access network device receives the paging message, the access network device may receive the paging message according to the WUR-related capability of the terminal device by using a paging method. For example, the terminal device is instructed to receive the paging message by using the wake up signal supported by the WUR. The core network may also selectively send the wake up signal-related capability of the terminal device to the access network device based on implementation algorithm thereof. For example, if the wake up signal-related capability reported by the access network device to the terminal device of the core network includes two capabilities, that is, PDCCH-based PEI and the capability information corresponding to the WUR of the terminal device, the core network sends only a part of the capabilities to the access network device based on certain factors, and the access network device instructs the terminal device to receive the paging message.

In a specific example, the access network device may report a complete wake up signal-related capability of the terminal device (including capability information corresponding to the WUR of the terminal device and/or the PDCCH-based PEI) to the core network, and the core network also sends the completely wake up signal-related capability of the terminal device to the access network device. The access network device may determine a wake up signal-based paging scheme based on an implementation algorithm of the access network or the information of measurement report or the like of the terminal device.

In some implementations of the first example, the terminal device receives a first WUS. A type of the first WUS is determined based on the first capability information, and/or a parameter for transmitting the first WUS is determined based on the first capability information. The terminal device monitors a paging message according to the first WUS.

For example, the first WUS may indicate monitoring the paging message, and in this case, the terminal device may activate the primary receiver of the terminal device and monitor the paging message through the primary receiver. For another example, the first WUS may indicate not monitoring the paging message, and in this case, the terminal device does not activate the primary receiver of the terminal device, that is the primary receiver of the terminal device remains to be in the dormancy state.

In some implementations of the first example, the access network device sends the first WUS to the terminal device, and the first WUS wakes up the terminal device to monitor the paging message. A type of the first WUS is determined based on the first capability information, and/or a parameter for transmitting the first WUS is determined based on the first capability information.

In some implementations of the first example, in case where the access network device does not support the type of the WUS supported by the WUR of the terminal device, the access network device determines not to send the capability information corresponding to the WUR of the terminal device to the core network device.

In some implementations of the first example, the access network device determines whether the access network device supports the type of the WUS supported by the WUR of the terminal device, according to at least one of: a size of a cell to be paged, a capability of the access network device, or paging resource configuration information of the terminal device.

In the second example, the first capability information includes but is not limited to at least one of: WUR capability information of the terminal device, type information of a WUS supported by the WUR of the terminal device, a time interval between the WUS supported by the WUR of the terminal device and a starting time of an associated DRX on duration timer.

That is to say, in the second example, the terminal device is in an RRC connected state.

In some implementations, the time interval between the WUS supported by the WUR of the terminal device and a starting time of an associated DRX on duration timer may be a minimum interval between the WUS supported by the WUR of the terminal device and a starting time of an associated DRX on duration timer.

In some implementations of the second example, the time interval between the WUS supported by the WUR of the terminal device and a starting time of an associated DRX on duration timer includes: a time interval between each of different types of WUSs supported by the WUR of the terminal device and a starting time of a respective associated DRX on duration timer.

In some implementations of the second example, the WUR capability information of the terminal device includes but is not limited to at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

In some implementations, the power supply manner supported by the WUR of the terminal device is wireless power supply. For example, the WUR of the terminal device is powered by an access network device (such as a base station), or the WUR of the terminal device is powered by a power supply node. Alternatively, the power supply manner supported by the WUR of the terminal device is power supply from the terminal device, that is, the terminal device supplies power for the WUR of the terminal device.

In some implementations, the modulation manner supported by the WUR of the terminal device is a modulation manner of the received signal supported by the wake up receiver, including the Amplitude Shift Keying (ASK) modulation, Frequency Shift Keying (FSK) modulation, 2Phase-Shift Keying (2PSK) and the like. The ASK is a digital modulation in which amplitude of a carrier varies with the digital baseband signal. When the digital baseband signal is binary, the ASK is binary Amplitude Shift Keying (2ASK). The 2ASK, also known as Switch Keying or On-Off Keying (OOK), controls by using unipolar non-return-to-zero code sequence a positive line carrier to be turned on or turned off. Alternatively, the ASK also includes 4ASK, 8ASK, etc., which is not limited in the embodiment. The FSK is a digital modulation in which a frequency of a carrier varies with the digital baseband signal. When the digital baseband signal is binary, the FSK is binary Frequency Shift Keying (2FSK). The 2FSK transforms two different carrier signals into digital signals to implement information

EP 4 456 609 A1

transmission. The state of transmitted information is represented by the change of frequency of the carrier, and the frequency of modulated carrier varies with the states 0 and 1 of binary sequence. Optionally, the FSK also includes 4FSK, 8FSK, etc., which is not limited in the embodiment. The PSK is a digital modulation in which a phase of the carrier varies with the digital baseband signal. The 2PSK is the simplest form of the PSK, and transmits binary information by using two carriers, a difference of initial phases of which is 180.

In some implementations, the bandwidth supported by the WUR of the terminal device includes a bandwidth at which the wake up receiver receives the wake up signal.

In some implementations, the frequency band supported by the WUR of the terminal device includes a frequency band in which the wake up receiver operates, etc.

In some implementations, the signal waveform supported by the WUR of the terminal device is associated with the demodulation manner supported by the WUR of the terminal device, and different signal waveforms are generated by using different modulation manners.

In some implementations, the reception time supported by the WUR of the terminal device may be, for example, a periodic starting time length, a turn-on cycle of the wake up receiver, etc.

In some implementations, the information type supported by the WUR of the terminal device includes but is not limited to at least one of: channel occupancy information, switching information of the search space set group of the PDCCH, skipping information of the PDCCH monitoring occasion, a DRX command, physical layer signaling, Medium Access Control (MAC) layer signaling, or RRC layer signaling.

In some implementations of the second example, the terminal device receives a second WUS. A type of the second WUS is determined based on the first capability information, and/or a parameter for transmitting the second WUS is determined based on the first capability information. The terminal device determines, according to the second WUS, whether to monitor a PDCCH during a DRX on duration.

For example, the second WUS may indicate monitoring the PDCCH during the DRX on duration, and in this case, the terminal device may activate the primary receiver of the terminal device and monitor the PDCCH during the DRX on duration through the primary receiver.

For another example, the second WUS may indicate not monitoring the PDCCH during the DRX on duration, and in this case, the terminal device does not activate the primary receiver of the terminal device, i.e., the primary receiver of the terminal device remains to be in the dormancy state.

In some implementations of the second example, the terminal device receives a third WUS. A type of the third WUS is determined based on the first capability information, and/or a parameter for transmitting the third WUS is determined based on the first capability information.

In some implementations, the third WUS indicates at least one of channel occupancy information, switching information of the search space set group of the PDCCH, skipping information of the PDCCH monitoring occasion, or a DRX command.

For example, in an NR system of an unlicensed spectrum, the terminal device may receive the WUS (i.e., the third WUS) indicating channel occupancy information through the WUR, which can reduce power consumption caused by blind detection on the PDCCH performed by the terminal device.

For example, when a PDCCH monitoring occasion is adaptive, the terminal device may adaptively monitor the PDCCH by switching the search space set group (SSSG), thereby saving the power.

It is to be noted that the switching command of the SSSG may be indicated by DCI. For example, a switching behavior of the SSSG indicated by the DCI may include a behavior 2 that the PDCCH is monitored according to SSSG#0; behavior 2A that SSSG#0 is switched to SSSG#1; behavior 2B that SSSG#0 and SSSG#1 are switched to SSSG#2 when three SSSGs are configured. For example, if two SSSGs are configured, the DCI indicates 00, which indicates the behavior 2, i.e., the SSSG of the terminal device is switched to SSSG#0. The DCI indicates 01, which indicates the behavior 2A, i.e., the SSSG of the terminal device is switched to SSSG#1. In addition to the switching of the SSSG based on indication of the DCI indication, an implicit switching of the SSSG based on a timer may be included. For example, a timer is started when the PDCCH detection according to one SSSG is started, and whether to switch to another SSSG is determined according to a result of the detection, such as switching from SSSG#1 back to SSSG#0.

In the embodiment, the terminal device receives the WUS (i.e., the third WUS) indicating switching information of the search space set group of the PDCCH through the WUR. Compared with the switching of the SSSG based on indication of the DCI, the power consumption for detecting the PDCCH to obtain the DCI can be reduced, and a time delay of detecting the PDCCH according to the search space set can be reduced, so that the switching of the SSSG can be performed more quickly and power saving effect can be further improved. Compared with the switching of the SSSG based on the timer, the power consumption and the time delay caused by detecting the PDCCH can be reduced, and the terminal device can save more power.

For an example, in the skipping mechanism of the PDCCH monitoring occasion (the PDCCH skipping mechanism), the PDCCH monitoring occasion corresponding to the current search space set group may be skipped, which can reduce the monitoring on a part of PDCCHs, thereby saving the power.

12

It is to be noted that, PDCCH skipping information is indicated by the DCI. The PDCCH skipping behaviors indicated by the DCI may include: behavior 1 that the PDCCH skipping is not activated; behavior 1A that the PDCCH skipping is performed, and a skipping duration is T1; behavior 1A that the PDCCH skipping is performed, and a skipping duration is T2; behavior 1A that PDCCH skipping is performed, and a skipping duration is T3.

In the embodiment, the terminal device indicates, through the WUR, the WUS (i.e., the third WUS) for receiving the PDCCH skipping information. Compared with the PDCCH skipping based on the indication of the DCI, the power consumption for detecting the PDCCH to obtain the DCI can be reduced, and a time delay of detecting the PDCCH according to the search space set can be reduced, so that the indication of the PDCCH skipping can be performed more quickly and power saving effect can be further improved.

For an example, the DRX cycle of the terminal device can be configured as a short DRX cycle and a long DRX cycle. When the terminal device is in the short DRX cycle, a timer is started or restarted according to a reception situation of data scheduling. When the timer expires, the terminal device may be switched to be in the long DRX cycle to further save the power. Moreover, the network device may also enter the short DRX cycle or long DRX cycle through a DRX command.

It is to be noted that the DRX command is sent to the terminal device through Media Access Control Control Element (MAC CE).

In the embodiment, the terminal device receives the WUS (i.e., the third WUS) indicating the DRX command through the WUR.

For example, during switching the DRX cycle, it is assumed that the terminal device is configured with a short DRX cycle and a long DRX cycle. The terminal device is initially in a long DRX cycle state, and when the terminal device receives data scheduling, the terminal device starts or restarts the DRX inactivity timer (drx-InactivityTimer). When the drx-InactivityTimer expires, or the terminal device receives the MAC CE carrying the DRX command, the terminal device enters the short DRX cycle and simultaneously starts a D short RX cycle timer (drxShortCycleTimer). When the drxShortCycleTimer expires, or the terminal device receives an MAC CE carrying the long DRX command, the terminal device enters the long DRX cycle state. The terminal device keeps detecting the PDCCH before the timer drx-InactivityTimer expires. Before the drxShortCycleTimer expires, the terminal device also keeps the discontinuous reception according to the short DRX cycle.

In some implementations, the third WUS is used for carrying at least one of: physical layer signaling, MAC layer signaling, or RRC layer signaling.

For an example, after the WUR is introduced, since the power consumption caused by receiving the wake up signal through the WUR is reduced, some signaling of the physical layer, the MAC layer and the RRC layer may be received through the WUR, and the signaling is carried through a WUS format supported by the WUR. The signaling includes for example a power control command, a Timing Advance (TA) command, an aperiodic Channel State Information (CSI) report, a Sounding Reference Signal (SRS) request, an uplink cancellation, synchronization information, an indication about no transmission on a target resource, a partial System Information Block (SIB)/Master Information Block (MIB) information, and the like, which are not listed herein.

In the embodiment of the present disclosure, after the terminal device is configured with the WUR, an information type indicated by the received wake up signal and functions implemented by the received wake up signal may also be reported as the capabilities of the terminal device. The functions of the wake up signal listed above may be reported separately as the capability, and may also be reported according to a supported function set, which is not limited in the present disclosure.

Therefore, in the embodiment of the present disclosure, the terminal device reports the capability information corresponding to the WUR of the terminal device, and the network device may determine a manner for sending the WUS to the terminal device.

Furthermore, the WUR of terminal device and WUS capability supported by the WUR are reported. Therefore, the network may make full use of the capability of the terminal device, and power saving effect can be achieved through the WUS. In addition, a separate paging resource is configured for a terminal device having a specific capability of the wake up signal, the power saving of the terminal device can be realized by making full use of the wake up signal.

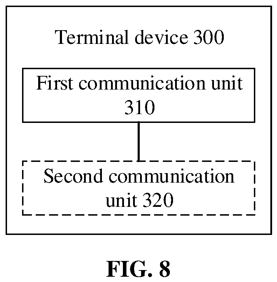

The method embodiments of the present disclosure have been described in detail above with reference to FIG. 7, and device embodiments of the present disclosure are described in detail below with reference to FIG. 8 to FIG. 10. It is to be understood that the device embodiments correspond to the method embodiments, and regarding similar descriptions, reference may be made to the method embodiments.

FIG. 8 shows a schematic block diagram of a terminal device 300 according to an embodiment of the present disclosure. As shown in FIG. 8, the terminal device 300 includes a first communication unit 310.

The first communication unit 310 is configured to send first capability information. The first capability information is capability information corresponding to a WUR of the terminal device.

In some embodiments, the first capability information includes at least one of: WUR capability information of the terminal device, type information of a WUS supported by the WUR of the terminal device, a time interval between the WUS supported by the WUR of the terminal device and an associated paging occasion, or a time interval between the WUS supported by the WUR of the terminal device and an associated paging frame.

In some embodiments, the time interval between the WUS supported by the WUR of the terminal device and the associated paging occasion includes a time interval between each of different types of WUSs supported by the WUR of the terminal device and a respective associated paging occasion.

In some embodiments, the time interval between the WUS supported by the WUR of the terminal device and the associated paging frame includes a time interval between each of different types of WUSs supported by the WUR of the terminal device and a respective associated paging frame.

In some embodiments, the WUR capability information of the terminal device includes at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or an information type supported by the WUR of the terminal device.

In some embodiments, the terminal device 300 further includes a second communication unit 320.

The second communication unit 320 is configured to receive first configuration information.

The first configuration information is used for configuring a target paging resource. At least one terminal device corresponding to the target paging resource supports the capability information corresponding to the WUR, and the at least one terminal device includes the terminal device.

In some embodiments, the terminal device 300 further includes a second communication unit 320.

The second communication unit 320 is configured to receive a first WUS. A type of the first WUS is determined based on the first capability information, and/or a parameter for transmitting the first WUS is determined based on the first capability information.

The second communication unit 320 is also configured to monitor a paging message according to the first WUS.

In some embodiments, the terminal device is in an RRC idle state, or the terminal device is in an RRC inactive state.

In some embodiments, the first capability information includes at least one of: WUR capability information of the terminal device, type information of a WUS supported by the WUR of the terminal device, a time interval between the WUS supported by the WUR of the terminal device and a starting time of an associated DRX on duration timer.

In some embodiments, the time interval between the WUS supported by the WUR of the terminal device and a starting time of an associated DRX on duration timer includes: a time interval between each of different types of WUSs supported by the WUR of the terminal device and a starting time of a respective associated DRX on duration timer.

In some embodiments, the WUR capability information of the terminal device includes at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or an information type supported by the WUR of the terminal device.

In some embodiments, the terminal device 300 further includes a second communication unit 320.

The second communication unit 320 is configured to receive a second WUS. A type of the second WUS is determined based on the first capability information, and/or a parameter for transmitting the second WUS is determined based on the first capability information.

The second communication unit 320 is further configured to determine, according to the second WUS, whether to monitor a PDCCH during a DRX on duration.

In some embodiments, the terminal device 300 further includes a second communication unit 320.

The second communication unit 320 is configured to receive a third WUS. A type of the third WUS is determined based on the first capability information, and/or a parameter for transmitting the third WUS is determined based on the first capability information.

The third WUS indicates at least one of: channel occupancy information, switching information of the SSSG of the PDCCH, PDCCH skipping information, or a DRX command.

Alternatively, the third WUS is used for carrying at least one of physical layer signaling, MAC layer signaling and RRC layer signaling.

In some embodiments, the terminal device is in an RRC connected state.

In some embodiments, the communication unit may be a communication interface or a transceiver or an input-output interface of a communication chip or a system-on-chip.

It is to be understood that the terminal device 300 in the embodiments of the present disclosure may correspond to the terminal device in the method embodiments of the present disclosure, and the above and other operations and/or functions of the units in the terminal device 300 are intended to implement the corresponding flow of the terminal device in the method 200 illustrated in FIG. 7, which will not be elaborated herein for the sake of brevity.

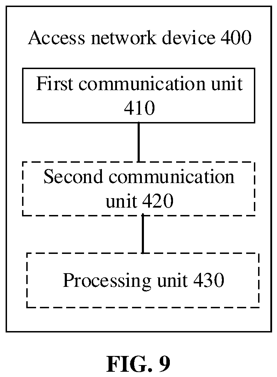

FIG. 9 shows a schematic block diagram of an access network device 400 according to an embodiment of the present disclosure. As shown in FIG. 9, the access network device 400 includes a first communication unit 410.

The first communication unit 410 is configured to receive first capability information sent by a terminal device. The first capability information is capability information corresponding to a WUR of the terminal device.

In some embodiments, the first capability information includes at least one of: WUR capability information of the terminal device, type information of a WUS supported by the WUR of the terminal device, a time interval between the WUS supported by the WUR of the terminal device and an associated paging occasion, or a time interval between the WUS supported by the WUR of the terminal device and an associated paging frame.

In some embodiments, the time interval between the WUS supported by the WUR of the terminal device and the associated paging occasion includes a time interval between each of different types of WUSs supported by the WUR of the terminal device and a respective associated paging occasion.

In some embodiments, the time interval between the WUS supported by the WUR of the terminal device and the associated paging frame includes a time interval between each of different types of WUSs supported by the WUR of the terminal device and a respective associated paging frame.

In some embodiments, the WUR capability information of the terminal device includes at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

In some embodiments, the access network device 400 further includes a second communication unit 420.

The second communication unit 420 is configured to send first configuration information to the terminal device.

The first configuration information is used for configuring a target paging resource, at least one terminal device corresponding to the target paging resource supports the capability information corresponding to the WUR, and the at least one terminal device includes the terminal device.

In some embodiments, the access network device 400 further includes a second communication unit 420.

The second communication unit 420 is configured to send second capability information to the core network device.

The second capability information includes a part or all of contents included in the first capability information.

In some embodiments, the access network device 400 further includes a processing unit 430.

The first communication unit 410 is further configured to receive the paging message sent by the core network device. The paging message includes third capability information, and the third capability information includes a part or all of contents included in the second capability information.

The processing unit 430 is configured to determine to wake up the terminal device by using the type of the WUS supported by the WUR of the terminal device to receive a paging message.

In some embodiments, the processing unit 430 is configured to determine, according to implementation of the access network device or a measurement result of the terminal device, to wake up the terminal device by using the type of the WUS supported by the WUR of the terminal device, to receive the paging message.

In some embodiments, the second communication unit 420 is further configured to send a first WUS to the terminal device.

The first WUS is used for waking up the terminal device to monitor the paging message. A type of the first WUS is determined based on the first capability information, and/or a parameter for transmitting the first WUS is determined based on the first capability information.

In some embodiments, in case where the access network device does not support the type of the WUS supported by the WUR of the terminal device, the access network device determines not to send the capability information corresponding to the WUR of the terminal device to the core network device.

In some embodiments, the access network device 400 further includes a processing unit 430.

The processing unit 430 is configured to determine whether the access network device supports the type of the WUS supported by the WUR of the terminal device according to at least one of: a size of a cell to be paged, a capability of the access network device, or paging resource configuration information of the terminal device.

In some embodiments, the terminal device is in the RRC idle state, or the terminal device is in the RRC inactive state.

In some embodiments, the first capability information includes at least one of: WUR capability information of the terminal device, type information of a WUS supported by the WUR of the terminal device, a time interval between the WUS supported by the WUR of the terminal device and a starting time of an associated DRX on duration timer.

In some embodiments, the time interval between the WUS supported by the WUR of the terminal device and a starting time of an associated DRX on duration timer includes: a time interval between each of different types of WUSs supported by the WUR of the terminal device and a starting time of a respective associated DRX on duration timer.

In some embodiments, the WUR capability information of the terminal device includes at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

In some embodiments, the access network device 400 further includes a second communication unit 420.

The second communication unit 420 is configured to send a second WUS to the terminal device.

A type of the second WUS is determined based on the first capability information, and/or a parameter for transmitting the second WUS is determined based on the first capability information. The second WUS indicates whether the terminal device monitors the PDCCH during the DRX on duration.

In some embodiments, the access network device 400 further includes a second communication unit 420.

The second communication unit 420 is configured to send a third WUS to the terminal device. A type of the third WUS is determined based on the first capability information, and/or a parameter for transmitting the third WUS is determined based on the first capability information.

The third WUS indicates at least one of: channel occupancy information, switching information of the SSSG of the PDCCH, PDCCH skipping information, or a DRX command; or the third WUS is used for carrying at least one of: physical layer signaling, MAC layer signaling and RRC layer signaling.

In some embodiments, the terminal device is in an RRC connected state.

In some embodiments, the communication unit may be a communication interface or a transceiver or an input-output interface of a communication chip or a system-on-chip.

It is to be understood that the access network device 400 in the embodiments of the present disclosure may correspond to the access network device in the method embodiments of the present disclosure, and the above and other operations and/or functions of the units in the access network device 400 are intended to implement the corresponding flow of the access network device in the method 200 illustrated in FIG. 7, which will not be elaborated herein for the sake of brevity

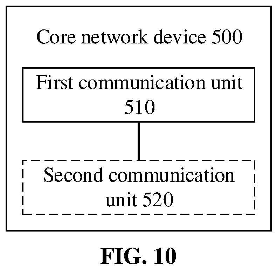

FIG. 10 shows a schematic block diagram of a core network device 500 according to an embodiment of the present disclosure. As shown in FIG. 10, the core network device 500 includes a first communication unit 510.

The first communication unit 510 is configured to receive second capability information sent by an access network device. The second capability information is capability information corresponding to a WUR of the terminal device.

In some embodiments, the second capability information includes at least one of: WUR capability information of the terminal device, type information of a WUS supported by the WUR of the terminal device, a time interval between the WUS supported by the WUR of the terminal device and an associated paging occasion, or a time interval between the WUS supported by the WUR of the terminal device and an associated paging frame.

In some embodiments, the time interval between the WUS supported by the WUR of the terminal device and the associated paging occasion includes a time interval between each of different types of WUSs supported by the WUR of the terminal device and a respective associated paging occasion.

In some embodiments, the time interval between the WUS supported by the WUR of the terminal device and the associated paging frame includes a time interval between each of different types of WUSs supported by the WUR of the terminal device and a respective associated paging frame.

In some embodiments, the WUR capability information of the terminal device includes at least one of: a bandwidth supported by the WUR of the terminal device, a modulation manner supported by the WUR of the terminal device, a frequency band supported by the WUR of the terminal device, a power supply manner supported by the WUR of the terminal device.

In some embodiments, the core network device 500 further includes a second communication unit 520.

The second communication unit 520 is configured to send a paging message to an access network device. The paging message includes the third capability information, and the third capability information includes a part or all of contents included in the second capability information.

In some embodiments, the terminal device is in an RRC idle state, or the terminal device is in an RRC inactive state.

In some embodiments, the communication unit may be a communication interface or a transceiver or an input-output interface of a communication chip or a system-on-chip.

It is to be understood that the core network device 500 in the embodiments of the present disclosure may correspond to the core network device in the method embodiments of the present disclosure, and the above and other operations and/or functions of the units in the core network device 500 are intended to implement the corresponding flow of the core network device in the method 200 illustrated in FIG. 7, which will not be elaborated herein for the sake of brevity.

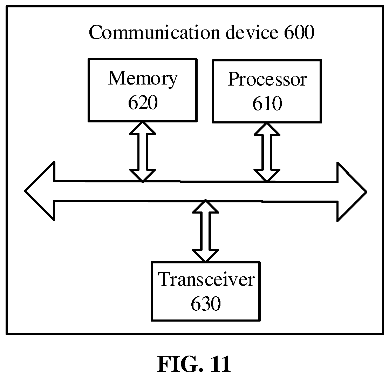

FIG. 11 is a schematic structural diagram of a communication device 600 according to an embodiment of the present disclosure. The communication device 600 illustrated in FIG. 11 includes a processor 610. The processor 610 may invoke and run a computer program from a memory to implement the method in the embodiments of the present disclosure.

In some embodiments, as shown in FIG. 11, the communication device 600 may also include a memory 620. The processor 610 may invoke and run a computer program from the memory 620 to implement the method in the embodiments of the present disclosure.

The memory 620 may be a separate device independent of the processor 610 or the memory 620 may be integrated into the processor 610.

In some embodiments, as shown in FIG. 11, the communication device 600 may also include a transceiver 630. The processor 610 may control the transceiver 630 to communicate with other devices, and in particular, to send information or data to other devices, or receive information or data sent by other devices.

The transceiver 630 may include a transmitter and a receiver. The transceiver 630 may further include an antenna(s), the number of which may be one or more.

In some embodiments, the communication device 600 may be the access network device in the embodiments of the present disclosure, and the communication device 600 may implement the flows implemented by the access network device in each method of the embodiments of the present disclosure, which will not be repeated herein for the sake of brevity.

In some embodiments, the communication device 600 may be the core network device in the embodiments of the present disclosure, and the communication device 600 may implement the flows implemented by the core network device in each method of the embodiments of the present disclosure, which will not be repeated herein for the sake of brevity.

In some embodiments, the communication device 600 may be the terminal device in the embodiments of the present disclosure, and the communication device 600 may implement the flows implemented by the terminal device in each method of the embodiments of the present disclosure, which will not be repeated herein for the sake of brevity.

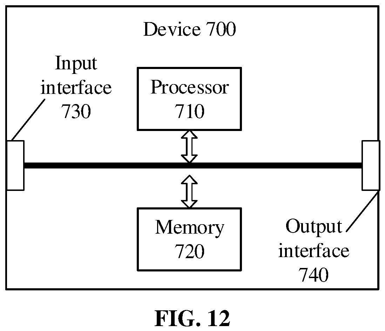

FIG. 12 is a schematic structural diagram of a device according to an embodiment of the present disclosure. The device 700 shown in FIG. 12 includes a processor 710 that may invoke and run a computer program from a memory to implement the method in the embodiments of the present disclosure.

In some embodiments, as shown in FIG. 12, the device 700 may also include a memory 720. The processor 710 may invoke and run a computer program from the memory 720 to implement the method in the embodiments of the present disclosure.

The memory 720 may be a separate device independent of the processor 710 or the memory 720 may be integrated into the processor 710.

In some embodiments, the device 700 may also include an input interface 730. The processor 710 may control the input interface 730 to communicate with other devices or chips, and in particular may obtain information or data sent by other devices or chips.

In some embodiments, the device 700 may also include an output interface 740. The processor 710 may control the output interface 740 to communicate with other devices or chips, and in particular may output information or data to other devices or chips.

In some embodiments, the device may be applied to the access network device in the embodiments of the present disclosure, and the device may implement the flows implemented by the access network device in each method of the embodiments of the present disclosure, which is not repeated herein for the sake of brevity.

In some embodiments, the device may be applied to the core network device in the embodiments of the present disclosure, and the device may implement the flows implemented by the core network device in each method of the embodiments of the present disclosure, which is not repeated herein for the sake of brevity.

In some embodiments, the device may be applied to the terminal device in the embodiments of the present disclosure, and the device may implement the flows implemented by the terminal device in each method of the embodiments of the present disclosure, which is not repeated herein for the sake of brevity

In some embodiments, the device mentioned in the embodiments of the present disclosure may also be a chip, which, for example, may be a system level chip, a system chip, a chip system or an on-chip system chip, etc.

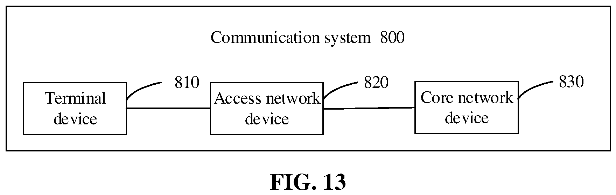

FIG. 13 is a schematic block diagram of a communication system 800 according to an embodiment of the present disclosure. As shown in FIG. 13, the communication system 800 includes a terminal device 810, an access network device 820 and a core network device 830.

The terminal device 810 may be configured to implement the functions implemented by the terminal device in the above-mentioned method, the access network device 820 may be configured to implement the functions implemented by the access network device in the above-mentioned method, and the core network device 830 may be configured to implement the functions implemented by the core network device in the above-mentioned method, which will not be repeated herein for the sake of brevity.

It is to be understood that the processor of the embodiments of the present disclosure may be an integrated circuit chip having signal processing capacity. In an implementation process, various steps of the above method embodiments may be completed by an integrated logic circuit of hardware in the processor or an instruction in the form of software. The above processor may be a general-purpose processor, a Digital Signal Processor (DSP), an Application Specific Integrated Circuit (ASIC), a Field Programmable Gate Array (FPGA), or other programmable logic devices, discrete gate or transistor logic devices, and discrete hardware components. Various methods, steps, and logical blocks disclosed in the embodiments of the present disclosure may be implemented or performed. The general-purpose processor may be a microprocessor, any conventional processor, or the like. Steps of the methods disclosed with reference to the embodiments of the present disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the present disclosure may be a volatile memory or a nonvolatile memory, or may include both the volatile memory and the nonvolatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, which is used as an external high-speed cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It is to be noted that the memory of the systems and methods described herein includes but is not limited to these and any other proper types of memories.

It is to be understood that the abovementioned memories are exemplary but not restrictive, for example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM). That is to say, the memories described in the embodiment of the present disclosure are intended to include, but not limited to, these and any other suitable types of memories.

The embodiments of the present disclosure further provide a computer-readable storage medium, which is configured to store a computer program.

In some embodiments, the computer-readable storage medium may be applied to the access network device in the embodiments of the present disclosure. The computer program enables a computer to execute flows implemented by the access network device in each method of the embodiments of the present disclosure, which will not be elaborated here for simplicity.

In some embodiments, the computer-readable storage medium may be applied to the core network device in the embodiments of the present disclosure. The computer program enables a computer to execute flows implemented by the core network device in each method of the embodiments of the present disclosure, which will not be elaborated here for simplicity.

In some embodiments, the computer-readable storage medium may be applied to the terminal device in the embodiments of the present disclosure. The computer program enables a computer to execute corresponding flows implemented by the terminal device in each method of the embodiments of the present disclosure, which will not be elaborated here for simplicity.

The embodiments of the present disclosure further provide a computer program product, which includes computer program instructions.

In some embodiments, the computer program product may be applied to the access network device in the embodiments of the present disclosure. The computer program instructions enable a computer to execute flows implemented by the access network device in each method of the embodiments of the present disclosure, which will not be elaborated here for simplicity.

In some embodiments, the computer program product may be applied to the core network device in the embodiments of the present disclosure. The computer program instructions enable a computer to execute flows implemented by the core network device in each method of the embodiments of the present disclosure, which will not be elaborated here for simplicity.

In some embodiments, the computer program product may be applied to the terminal device in the embodiments of the present disclosure. The computer program instructions enable a computer to execute flows implemented by the terminal device in each method of the embodiments of the present disclosure, which will not be elaborated here for simplicity.

The embodiments of the present disclosure further provide a computer program.

In some embodiments, the computer program may be applied to the access network device in the embodiments of the present disclosure. The computer program runs in a computer to enable the computer to execute flows implemented by the access network device in each method of the embodiments of the present disclosure, which will not be elaborated herein for simplicity.

In some embodiments, the computer program may be applied to the core network device in the embodiments of the present disclosure. The computer program runs in a computer to enable the computer to execute flows implemented by the core network device in each method of the embodiments of the present disclosure, which will not be elaborated herein for simplicity.

In some embodiments, the computer program may be applied to the terminal device in the embodiments of the present disclosure. The computer program runs in a computer to enable the computer to execute flows implemented by the terminal device in each method of the embodiments of the present disclosure, which will not be elaborated herein for simplicity.

Those of ordinary skill in the art may be aware that the units and algorithm steps in the examples described with reference to the embodiments disclosed herein can be implemented by electronic hardware or a combination of computer software and electronic hardware. Whether the functions are performed by hardware or software depends on particular applications and design constraints of the technical solutions. A person skilled in the art may realize the described functions for each particular disclosure by different methods, but it is not considered that the implementation is beyond the scope of the present disclosure.

It may be clearly understood by a person skilled in the art that, for the purpose of convenient and brief description, regarding a detailed working process of the foregoing system, device, and unit, reference may be made to a corresponding process in the foregoing method embodiments, and details are not described again herein.

In the several embodiments provided in the present disclosure, it is to be understood that the disclosed system, device, and method may be implemented in other modes. For example, the device embodiment described above is only schematic, and for example, division of the units is only logic function division, and other division manners may be adopted during practical implementation. For example, multiple units or components may be combined or integrated into another system, or some characteristics may be neglected or not executed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separated, and the components displayed as units may or may not be physical units, and may be located in one place or may be distributed over multiple network units. Some or all of the units may be selected according to actual needs to achieve the objectives of the solutions of the embodiments.

In addition, functional units in various embodiments of the present disclosure may be integrated into one processing unit, or each of the units may be physically separated, or two or more units may be integrated into one unit.

When the functions are realized in a form of a software functional unit and sold or used as an independent product, they may be stored in a computer-readable storage medium. Based on this understanding, the technical solutions of the embodiments of the present disclosure essentially or the parts that contribute to the prior art, or part of the technical solutions can be embodied in the form of a software product. The computer software product is stored in a storage medium, including multiple instructions for causing a computer device (which may be a personal computer, a server, or a network device, and the like) to execute all or part of the steps of the method described in the embodiments of the present disclosure. The foregoing storage medium includes a USB flash disk, a mobile hard disk drive, an ROM, an RAM, and various media that can store program codes, such as a magnetic disk or an optical disk.

The above descriptions are merely specific implementations of the present disclosure, but are not intended to limit the scope of protection of the present disclosure. Any variation or replacement readily figured out by a person skilled in the art within the technical scope disclosed in the present disclosure shall fall within the scope of protection of the present disclosure. Therefore, the scope of protection of the present disclosure is defined by the scope of protection of the claims.

**Claims**

1. A wireless communication method, comprising:
sending, by a terminal device, first capability information, wherein the first capability information is capability information corresponding to Wake Up Radio (WUR) of the terminal device.

2. The method of claim 1, wherein
the first capability information comprises at least one of: WUR capability information of the terminal device, type information of a Wake Up Signal (WUS) supported by the WUR of the terminal device, a time interval between the WUS supported by the WUR of the terminal device and an associated paging occasion, or a time interval between the WUS supported by the WUR of the terminal device and an associated paging frame.

3. The method of claim 2, wherein the time interval between the WUS supported by the WUR of the terminal device and the associated paging occasion comprises:
a time interval between each of different types of WUSs supported by the WUR of the terminal device and a respective associated paging occasion.

4. The method of claim 2, wherein the time interval between the WUS supported by the WUR of the terminal device and the associated paging frame comprises:
a time interval between each of different types of WUSs supported by the WUR of the terminal device and a respective associated paging frame.

5. The method of any one of claims 2 to 4, wherein the WUR capability information of the terminal device comprises at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

6. The method of any one of claims 2 to 5, further comprising:

receiving, by the terminal device, first configuration information,
wherein the first configuration information is used for configuring a target paging resource, at least one terminal device corresponding to the target paging resource supports the capability information corresponding to the WUR, and the at least one terminal device comprises the terminal device.

7. The method of any one of claims 2 to 6, further comprising:

receiving, by the terminal device, a first WUS, wherein a type of the first WUS is determined based on the first capability information, and/or a parameter for transmitting the first WUS is determined based on the first capability information; and
monitoring, by the terminal device, a paging message according to the first WUS.

8. The method of any one of claims 2 to 7, wherein
the terminal device is in a Radio Resource Control (RRC) idle state, or the terminal device is in an RRC inactive state.

9. The method of claim 1, wherein
the first capability information comprises at least one of: WUR capability information of the terminal device, type information of a Wake Up Signal (WUS) supported by the WUR of the terminal device, a time interval between the WUS supported by the WUR of the terminal device and a starting time of an associated Discontinuous Reception (DRX) on duration timer.

10. The method of claim 9, wherein the time interval between the WUS supported by the WUR of the terminal device and the starting time of the associated DRX on duration timer comprises:
a time interval between each of different types of WUSs supported by the WUR of the terminal device and a starting time of a respective associated DRX on duration timer.

11. The method of claim 9 or 10, wherein the WUR capability information of the terminal device comprises at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

12. The method of any one of claims 9 to 11, further comprising:

receiving, by the terminal device, a second WUS, wherein a type of the second WUS is determined based on the first capability information, and/or a parameter for transmitting the second WUS is determined based on the first capability information; and
determining, by the terminal device according to the second WUS, whether to monitor a Physical Downlink Control Channel (PDCCH) during a DRX on duration.

13. The method of any one of claims 9 to 12, further comprising:

receiving, by the terminal device, a third WUS, wherein a type of the third WUS is determined based on the first capability information, and/or a parameter for transmitting the third WUS is determined based on the first capability information,

wherein the third WUS indicates at least one of: channel occupancy information, switching information of a Search Space Set Group (SSSG) of a Physical Downlink Control Channel (PDCCH), skipping information of a PDCCH monitoring occasion, or a DRX command; or
the third WUS is used for carrying at least one of: physical layer signaling, Media Access Control (MAC) layer signaling and Radio Resource Control (RRC) layer signaling.

14. The method of any one of claims 9 to 13, wherein
the terminal device is in an RRC connected state.

15. A wireless communication method, comprising:
receiving, by an access network device, first capability information sent by a terminal device, wherein the first capability information is capability information corresponding to Wake Up Radio (WUR) of the terminal device.

16. The method of claim 15, wherein
the first capability information comprises at least one of: WUR capability information of the terminal device, type information of a Wake Up Signal (WUS) supported by the WUR of the terminal device, a time interval between the WUS supported by the WUR of the terminal device and an associated paging occasion, or a time interval between the WUS supported by the WUR of the terminal device and an associated paging frame.

17. The method of claim 16, wherein the time interval between the WUS supported by the WUR of the terminal device and the associated paging occasion comprises:
a time interval between each of different types of WUSs supported by the WUR of the terminal device and a respective associated paging occasion.

18. The method of claim 16, wherein the time interval between the WUS supported by the WUR of the terminal device and the associated paging frame comprises:
a time interval between each of different types of WUSs supported by the WUR of the terminal device and a respective associated paging frame.

19. The method of any one of claims 16 to 18, wherein the WUR capability information of the terminal device comprises at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or information type supported by the WUR of the terminal device.

20. The method of any one of claims 16 to 19, further comprising:

sending, by the access network device, first configuration information to the terminal device,
wherein the first configuration information is used for configuring a target paging resource, at least one terminal device corresponding to the target paging resource supports the capability information corresponding to the WUR, and the at least one terminal device comprises the terminal device.

21. The method of any one of claims 16 to 20, further comprising:

sending, by the access network device, second capability information to a core network device,
wherein the second capability information comprises a part or all of contents comprised in the first capability information.

22. The method of claim 21, further comprising:

receiving, by the access network device, a paging message sent by the core network device, wherein the paging message comprises third capability information, and the third capability information comprises a part or all of contents comprised in the second capability information; and
determining, by the access network device, to wake up the terminal device by using the type of the WUS supported by the WUR of the terminal device, to receive a paging message.

23. The method of claim 22, wherein determining, by the access network device, to wake up the terminal device by using the type of the WUS supported by the WUR of the terminal device to receive a paging message comprises:

determining, by the access network device according to implementation of the access network device or a measurement result of the terminal device, to wake up the terminal device by using the type of the WUS supported by the WUR of the terminal device, to receive the paging message.

24. The method of claim 22 or 23, further comprising:

sending, by the access network device, a first WUS to the terminal device,
wherein the first WUS is used for waking up the terminal device to monitor the paging message, and
a type of the first WUS is determined based on the first capability information, and/or a parameter for transmitting the first WUS is determined based on the first capability information.

25. The method of any one of claims 16 to 20, further comprising:
in case where the access network device does not support the type of the WUS supported by the WUR of the terminal device, determining, by the access network device, not to send the capability information corresponding to the WUR of the terminal device to the core network device.

26. The method of claim 25, further comprising:
determining, by the access network device, whether the access network device supports the type of the WUS supported by the WUR of the terminal device according to at least one of: a size of a cell to be paged, a capability of the access network device, or paging resource configuration information of the terminal device.

27. The method of any one of claims 16 to 26, wherein
the terminal device is in a Radio Resource Control (RRC) idle state, or the terminal device is in an RRC inactive state.

28. The method of claim 15, wherein
the first capability information comprises at least one of: WUR capability information of the terminal device, type information of a Wake Up Signal (WUS) supported by the WUR of the terminal device, a time interval between the WUS supported by the WUR of the terminal device and a starting time of an associated Discontinuous Reception (DRX) on duration timer.

29. The method of claim 28, wherein the time interval between the WUS supported by the WUR of the terminal device and the starting time of the associated DRX on duration timer comprises:
a time interval between each of different types of WUSs supported by the WUR of the terminal device and a starting time of a respective associated DRX on duration timer.

30. The method of claim 28 or 29, wherein the WUR capability information of the terminal device comprises at least one of: a bandwidth supported by the WUR of the terminal device, a modulation manner supported by the WUR of the terminal device, a frequency band supported by the WUR of the terminal device, a power supply manner supported by the WUR of the terminal device, a signal waveform supported by the WUR of the terminal device, a reception time supported by the WUR of the terminal device, or an information type supported by the WUR of the terminal device.

31. The method of any one of claims 28 to 30, further comprising:

sending, by the access network device, a second WUS to the terminal device,
wherein a type of the second WUS is determined based on the first capability information, and/or a parameter for transmitting the second WUS is determined based on the first capability information; and
the second WUS indicates whether the terminal device monitors a Physical Downlink Control Channel (PDCCH) during a DRX on duration.

32. The method of any one of claims 28 to 31, further comprising:

sending, by the access network device, a third WUS to the terminal device, wherein a type of the third WUS is determined based on the first capability information, and/or a parameter for transmitting the third WUS is determined based on the first capability information,
wherein the third WUS indicates at least one of: channel occupancy information, switching information of a Search Space Set Group (SSSG) of a Physical Downlink Control Channel (PDCCH), skipping information of a PDCCH monitoring occasion, or a DRX command; or
the third WUS is used for carrying at least one of: physical layer signaling, Media Access Control (MAC) layer signaling and a Radio Resource Control (RRC) layer signaling.

33. The method of any one of claims 28 to 32, wherein
the terminal device is in an RRC connected state.

34. A wireless communication method, comprising:
receiving, by a core network device, second capability information sent by an access network device, wherein the second capability information is capability information corresponding to a Wake Up Radio (WUR) of the terminal device.

35. The method of claim 34, wherein
the second capability information comprises at least one of: WUR capability information of the terminal device, type information of a Wake Up Signal (WUS) supported by the WUR of the terminal device, a time interval between the WUS supported by the WUR of the terminal device and an associated paging occasion, or a time interval between the WUS supported by the WUR of the terminal device and an associated paging frame.

36. The method of claim 35, wherein the time interval between the WUS supported by the WUR of the terminal device and the associated paging occasion comprises:
a time interval between each of different types of WUSs supported by the WUR of the terminal device and a respective associated paging occasion.

37. The method of claim 35, wherein the time interval between the WUS supported by the WUR of the terminal device and the associated paging frame comprises:
a time interval between each of different types of WUSs supported by the WUR of the terminal device and a respective associated paging frame.

38. The method of any one of claims 35 to 37, wherein the WUR capability information of the terminal device comprises at least one of: a bandwidth supported by the WUR of the terminal device, a modulation manner supported by the WUR of the terminal device, a frequency band supported by the WUR of the terminal device, a power supply manner supported by the WUR of the terminal device.

39. The method of claim 38, further comprising:
sending, by the core network device, a paging message to the access network device, wherein the paging message comprises third capability information, and the third capability information comprises a part or all of contents comprised in the second capability information.

40. The method of any one of claims 34 to 39, wherein
the terminal device is in a Radio Resource Control (RRC) idle state, or the terminal device is in an RRC inactive state.

41. A terminal device, comprising:
a first communication unit configured to send first capability information, wherein the first capability information is capability information corresponding to Wake Up Radio (WUR) of the terminal device.

42. An access network device, comprising:
a first communication unit configured to receive first capability information sent by a terminal device, wherein the first capability information is capability information corresponding to Wake Up Radio (WUR) of the terminal device.

43. A core network device, comprising:
a first communication unit configured to receive second capability information sent by an access network device, wherein the second capability information is capability information corresponding to Wake Up Radio (WUR) of the terminal device.

44. A terminal device comprising a processor and a memory, wherein the memory is configured to store a computer program, and the processor is configured to invoke and run the computer program stored in the memory, to enable the terminal device to perform the method of any one of claims 1 to 14.

45. An access network device comprising a processor and a memory, wherein the memory is configured to store a computer program, and the processor is configured to invoke and run the computer program stored in the memory, to enable the access network device to perform the method of any one of claims 15 to 33.

46. A core network device comprising a processor and a memory, wherein the memory is configured to store a computer program, and the processor is configured to invoke and run the computer program stored in the memory, to enable the core network device to perform the method of any one of claims 34 to 40.

47. A chip comprising a processor configured to invoke and run a computer program from a memory, to enable a device on which the chip is mounted to perform the method of any one of claims 1 to 14, or to enable a device on which the chip is mounted to perform the method of any one of claims 15 to 33, or to enable a device on which the chip is mounted to perform the method of any one of claims 34 to 40.

48. A computer-readable storage medium configured to store a computer program that causes a computer to perform the method of any one of claims 1 to 14, or to perform the method of any one of claims 15 to 33, or to perform the method of any one of claims 34 to 40.

49. A computer program product comprising computer program instructions causing a computer to perform the method of any one of claims 1 to 14, or to perform the method of any one of claims 15 to 33, or to perform the method of any one of claims 34 to 40.

50. A computer program causing a computer to perform the method of any one of claims 1 to 14, or to perform the method of any one of claims 15 to 33, or to perform the method of any one of claims 34 to 40.

**FIG. 1**

Power-saving
signal indicates
monitoring the
PDCCH

Power-saving
signal indicates
not monitoring
the PDCCH

Power-saving
signal indicates
monitoring the
PDCCH

PO or PF

PO or PF

PO or PF

**FIG. 2**

Power-saving
signal

Primary receiver

Wake up
signal

Wake up receiver

**FIG. 3**

**DRX cycle**

**PF**

**PO**

**FIG. 4**

Access network
device

Core network
device

UE capability information indication

**FIG. 5**

| Access network device | | Core network device |
|---|---|---|

Paging message

**FIG. 6**

**200**

```
┌──────────┐                              ┌──────────────┐
│ Terminal │                              │Access network│
│  device  │                              │    device    │
└────┬─────┘                              └──────┬───────┘
     │                                           │
     │   S210，The terminal device sends first   │
     │ capability information to an access network│
     │ device, and the first capability information is│
     │ capability information corresponding to   │
     │        WUR of the terminal device         │
     │──────────────────────────────────────────▶│
     │                                           │
     │                              ┌────────────┴────────────┐
     │                              │  S220，Receiving the    │
     │                              │     first capability    │
     │                              │       information       │
     │                              └────────────┬────────────┘
     │                                           │
```

FIG. 7

Terminal device 300

First communication unit
310

Second communication
unit 320

**FIG. 8**

FIG. 9

Core network device 500

First communication unit
510

Second communication
unit 520

**FIG. 10**

Communication device 600

Memory
620

Processor
610

Transceiver
630

**FIG. 11**

Device 700

Input
interface
730

Processor
710

Memory
720

Output
interface
740

**FIG. 12**

Communication system 800

Terminal device 810 Access network device 820 Core network device 830

**FIG. 13**

## INTERNATIONAL SEARCH REPORT

International application No.

**PCT/CN2021/141334**

**A.    CLASSIFICATION OF SUBJECT MATTER**

H04W 52/02(2009.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI, 3GPP: WUR, wake-up, wake up, raido, WUS, 唤醒接收机, 唤醒接收器, 唤醒无线电, 唤醒信号, 节能信号, offset, bandwidth, 偏移, 供能, 类型, type, 波形, 调制, modulation, 能力, capability, 间隔, 频段, interval, 接收时间, 带宽, 支持, support, 寻呼, paging, 监听, listen

**C.    DOCUMENTS CONSIDERED TO BE RELEVANT**

| Category* | Citation of document, with indication, where appropriate, of the relevant passages | Relevant to claim No. |
|---|---|---|
| X | CN 112567820 A (SONY CORP.) 26 March 2021 (2021-03-26)<br>description, paragraphs [0037]-[0147] | 1-50 |
| X | US 2016374019 A1 (INTEL CORP.) 22 December 2016 (2016-12-22)<br>description, paragraphs [0029]-[0337] | 1-50 |
| A | WO 2021162625 A1 (TELEFONAKTIEBOLAGET LM ERICSSON (PUBL)) 19 August 2021 (2021-08-19)<br>entire document | 1-50 |
| A | US 2021037469 A1 (TELEFONAKTIEBOLAGET LM ERICSSON (PUBL)) 04 February 2021 (2021-02-04)<br>entire document | 1-50 |
| A | ERICSSON. "Wake Up Signal"<br>*R2-1807773, 3GPP TSG-RAN2 Meeting #102*, 25 May 2018 (2018-05-25),<br>entire document | 1-50 |
| A | CN 109429318 A (HUAWEI TECHNOLOGIES CO., LTD.) 05 March 2019 (2019-03-05)<br>entire document | 1-50 |

☐ Further documents are listed in the continuation of Box C.　　☑ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **08 September 2022** | **28 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/141334**

| Patent document cited in search report | | | Publication date (day/month/year) | Patent family member(s) | | | Publication date (day/month/year) |
|---|---|---|---|---|---|---|---|
| CN | 112567820 | A | 26 March 2021 | WO | 2020030497 | A1 | 13 February 2020 |
| | | | | EP | 3834499 | A1 | 16 June 2021 |
| | | | | US | 2021185611 | A1 | 17 June 2021 |
| | | | | JP | 2021533688 | W | 02 December 2021 |
| US | 2016374019 | A1 | 22 December 2016 | | None | | |
| WO | 2021162625 | A1 | 19 August 2021 | | None | | |
| US | 2021037469 | A1 | 04 February 2021 | WO | 2019168455 | A1 | 06 September 2019 |
| | | | | EP | 3759848 | A1 | 06 January 2021 |
| CN | 109429318 | A | 05 March 2019 | WO | 2019037704 | A1 | 28 February 2019 |

Form PCT/ISA/210 (patent family annex) (January 2015)